# EUROPÄISCHE PATENTSCHRIFT

(11) **EP 1 842 707 B1**
(45) Veröffentlichungstag und Bekanntmachung des Hinweises auf die Patenterteilung: **23.06.2010**
(21) Anmeldenummer: 07004142.1
(22) Anmeldetag: 28.02.2007
(51) Int. Cl.: B60J 5/04, B60J 5/00

(54) **Tür für ein Fahrzeug, insbesondere ein Flurförderfahrzeug**
Door for a vehicle, in particular an industrial truck
Porte de véhicule, en particulier chariot de manutention

(30) Priorität: 03.03.2006 DE 202006003541 U
(43) Veröffentlichungstag der Anmeldung: 10.10.2007
(73) Patentinhaber: Sauermann, Hans, 85119 Ernsgaden (DE)
(72) Erfinder: Sauermann, Hans, 85119 Ernsgaden (DE)
(74) Vertreter: Witzany, Manfred

(56) Entgegenhaltungen:
- EP-A1- 1 518 759
- EP-A2- 0 260 767
- DE-A1- 19 832 076
- US-A- 5 393 118
- US-A- 5 529 369

## Beschreibung

Die Erfindung betrifft eine Tür für ein Fahrzeug, insbesondere ein Flurförderfahrzeug gemäß dem Oberbegriff des Patentanspruchs 1.

Aus der EP 1 518 759 A1 ist ein Rückhaltesystem für ein Flurförderfahrzeug bekannt, welches von einem Bügel gebildet ist, der einen Sicherheitsgurt trägt. Dieser Bügel ist um eine horizontale Achse schwenkbar gelagert und kann in ein Schloß einrasten. Zur Justierung des Schlosses ist der Bügel teleskopierbar.

Aus der US 5, 393, 118 sowie aus der US 5, 529, 369 ist ein Golf Cart bekannt, welches eine Tür aufweist. Diese Tür ist an drei Holmen gehalten, die schwenkbar am Fahrzeugrahmen abgestützt sind. Da die Schwenkachsen der einzelnen Holme unterschiedlich sind, ist einer der Holme zur Aufrechterhaltung der Verschwenkbarkeit teleskopierbar.

Aus der DE 198 32 076 A1 ist eine Kraftfahrzeugtür mit einer Versteifung bekannt. Diese Versteifung wird von zwei Balken gebildet, die über ein Kniehebelgetriebe in Längsrichtung verstellbar sind. Im Crashfall wird dieses Kniehebelsystem gestreckt und die Balken somit aus der Tür ausgefahren. Dies liefert eine erhebliche Versteifung der Tür, ohne die Tür selbst in ihrer Dimension anpaßbar zu gestalten.

Aus der EP 0 260 767 A2 ist eine gattungsgemäße Tür bekannt, die für ein Kraftfahrzeug vorgesehen ist. Diese Tür wird von einer Rückwand, einer Vorderwand und die sie verbindenden seitlichen Stege gebildet. Zur Erleichterung der Montage der Tür am Kraftfahrzeug ist diese Tür als Hohlkörper ausgebildet, der an Stützmitteln längs aufschiebbar ist. Auf diesen Stützmitteln ist insbesondere eine vertikal verschiebbare Fensterscheibe gehalten.

Der Erfindung liegt die Aufgabe zugrunde, eine Tür für ein Fahrzeug der eingangs genannten Art zu schaffen, die sich durch eine breitere Anwendbarkeit auszeichnet.

Diese Aufgabe wird erfindungsgemäß mit den Merkmalen des Patentanspruchs 1 gelöst.

Die Tür gemäß Anspruch 1 weist mindestens ein Scharnier und mindestens ein Schloß auf, die sich gegenüberliegen. Sind mehrere Scharniere vorgesehen, so sind diese fluchtend zueinander ausgerichtet, um ein problemloses Öffnen und Schließen der Tür zu ermöglichen. In der Regel reicht ein Schloß zum sicheren Verschließen der Tür aus, wobei in besonderen Anwendungsfällen auch mehrere Schlösser angeordnet sein können, die zueinander auch nicht fluchten müssen. Um die Tür an unterschiedlichste Kabinen der Fahrzeuge anpassen zu können, ist die Tür in ihrer Erstreckung zwischen dem Schloß und dem Scharnier teleskopierbar. Dabei ist insbesondere daran gedacht, im wesentlichen die Halterungen für Scharnier und Schloß aus dem Türkörper ausfahrbar zu gestalten, um auf diese Weise - eine individuelle Anpassung an unterschiedliche Fahrzeugkabinen zu erzielen. Insbesondere kann der Türkörper zwischen den Holmen der Fahrzeugkabine verschoben werden, um den Türkörper in eine Position bringen zu können, in der er eine optimale Schutzwirkung für den Fahrer ergibt.
Eine einfache Realisierung der gewünschten Teleskopierbarkeit der Tür ergibt sich gemäß Anspruch 2, in dem die Tür mindestens, eine Führung aufweist. In diese Führung greift wenigstens ein Holm ein, der das Scharnier bzw. Schloß trägt. Damit kann die Türlänge in weiten Grenzen verstellt werden, ohne die Sicherheitsfunktion der Tür in irgendeiner Weise zu beeinträchtigen.

Zur Vereinfachung des Aufbaus der Tür ist es gemäß Anspruch 3 vorteilhaft, wenn in mindestens eine der Führungen beidseits Holme eingreifen. Diese Holme tragen dann zum einen das Scharnier und zum anderen das Schloß, so daß sich hierdurch die Zahl der erforderlichen Führungen entsprechend verringert.

Da die Teleskopierbarkeit der Tür lediglich zur Anpassung an unterschiedliche Kabinen dient, muß eine einmal montierte Tür später in der Regel nicht mehr teleskopiert werden. Um zu vermeiden, daß sich die Türlänge selbsttätig verstellt und damit das Schloß nicht mehr schließt, ist es gemäß Anspruch 4 günstig, wenn das Teleskop der Tür arretierbar ist. Hierfür wird vorzugsweise eine Klemmschraube eingesetzt, die senkrecht zur Teleskoprichtung wirkt. Auf diese Weise ergibt sich eine ausreichend sichere Arretierung der Tür, so daß das Schloß im Betrieb stets funktionstüchtig bleibt.

Zur Erzielung einer weiter verbesserten Anpassung der Tür an unterschiedliche Fahrzeugkabinen ist es gemäß Anspruch 5 vorteilhaft, wenn die Tür im Bereich des Scharniers winkelverstellbar ist. Damit kann die Tür problemlos auch an unterschiedliche Neigungen der hinteren Säule der Kabine, der sogenannten B-Säule, angepaßt werden. Diese Winkelverstellung ist vorzugsweise mittels Klemmschrauben arretierbar.

Da die Tür bezüglich ihrer Winkelverstellbarkeit in ihrer geöffneten Lage eine erhebliche Hebelwirkung ausübt, kann es vorkommen, daß eine Arretierung der Winkelverstellbarkeit mittels Klemmschrauben allein nicht ausreicht. In diesem Fall ist es gemäß Anspruch 6 günstig, wenn der Tür ein verstellbarer Anschlag zugeordnet ist. Dieser Anschlag wirkt gegen eine Verschwenkung der Tür nach unten, da nach oben in der Regel keine größeren Kräfte wirken werden.

Zur Verbesserung der Funktionalität der Tür ist es gemäß Anspruch 7 vorteilhaft, wenn an der Tür mindestens eine Feder angreift. Diese Feder wird vorzugsweise von einer Gasfeder gebildet, wobei alternativ auch jede andere Federart möglich ist. Die Feder ist dabei derart eingebaut, daß beim Öffnen und Schließen der Tür ein Totpunkt überwunden werden muß. Die Tür wird daher durch die Wirkung der Feder sowohl in ihrer geschlossenen als auch in ihrer offenen Stellung mit Vorspannung in der jeweiligen Stellung gehalten.

Zur weiteren Anpassung der Tür an unterschiedliche Fahrzeugkabinen ist es gemäß Anspruch 8 günstig, wenn das Schloß in mindestens zwei Achsen verstellbar ist. Damit kann die Tür sehr präzise an unterschiedlichste Fahrzeugkabinen angepaßt werden. Vorzugsweise wird eine Verstellung des Schlosses um drei Achsen eingesetzt.

Gemäß Anspruch 9 ist es vorteilhaft, wenn dem Schloß ein federnder Anschlag zugeordnet ist. Dieser federnde Anschlag spannt die Tür gegen das Schloß vor, so daß sich die Tür stets sauber in ihrer Endlage befindet. Ein ungewolltes Klappern des Schlosses wird auf diese Weise zuverlässig verhindert.

Schließlich ist es gemäß Anspruch 10 vorteilhaft, wenn die Tür an mindestens einer Seite wenigstens teilweise beleuchtet, reflektierend bzw. mit fluoreszierender Farbe versehen ist. Diese Maßnahme erhöht die Sicherheit des Fahrzeugs bei geöffneter Tür, da die Tür von anderen besser gesehen wird.

Der Erfindungsgegenstand wird beispielhaft anhand der Zeichnung erläutert, ohne den Schutzumfang zu beschränken.

Es zeigt:
- Figur 1: eine teilweise geschnittene Darstellung durch eine Tür eines Fahrzeugs und
- Figur 2: eine Ansicht des fahrzeugfesten Teils eines Schlosses bei geöffneter Tür.

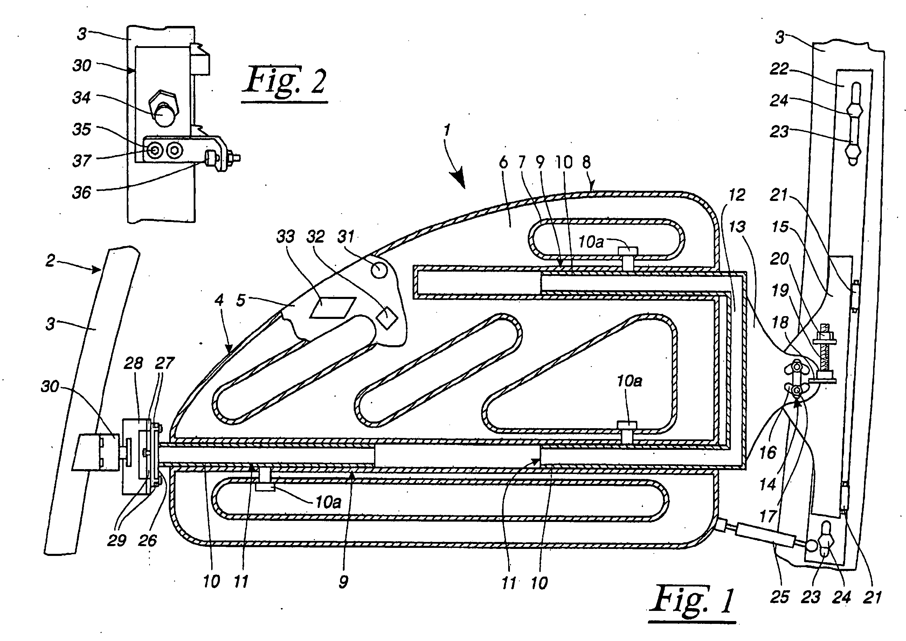

Die Figur 1 zeigt eine teilweise geschnittene Darstellung einer Tür 1 für ein Fahrzeug 2, von dem im wesentlichen Kabinensäulen 3 zu sehen sind.

Die Tür 1 weist einen Türkörper 4 auf, der dem Fahrer des Fahrzeugs 2 Schutz bei Unfällen, insbesondere beim Umkippen des Fahrzeugs 2 bieten soll. Der Türkörper 4 ist als Hohlkörper aus Kunststoff ausgebildet und weist eine Deckwand 5 und eine Rückwand 6 auf. Beide Wände 5, 6 sind durch Stege 7 miteinander verbunden, die auch den umlaufenden äußeren Rand 8 des Körpers 4 bilden.

Im Türkörper 4 sind zwei Führungen 9 eingeformt, die einen im wesentlichen rechteckförmigen, vorzugsweise quadratischen Querschnitt aufweisen. In diese Führungen 9 greifen Holme 10 ein, welche längs verschiebbar in den Führungen 9 gehalten sind. Die Holme 10 bilden zusammen mit den Führungen 9 Teleskope 11, welche eine Anpassung der Türlänge an unterschiedliche Fahrzeugkabinen ermöglichen.

An den Führungen 9 sind Klemmschrauben 10a gehalten, die gegen die Holme 10 drücken können, um diese zu arretieren. Die beiden rechts dargestellten Holme 10 sind durch einen Querholm 12 verbunden, so daß insgesamt ein U-förmiges Profil entsteht.

Am Querholm 12 ist ein Flansch 13 befestigt, der über eine Gelenkverbindung 14 mit einem weiteren Flansch 15 verschwenkbar verbunden ist. Die Gelenkverbindung 14 wird von zwei nierenförmigen Durchbrechungen 16 des Flansches 13 gebildet, die von Schrauben 17 durchdrungen sind. Die Schrauben 17 sind am Flansch 15 festgelegt und tragen an ihrem freien Ende nicht dargestellte Muttern. Mit Hilfe dieser Muttern können die beiden Flansche 13, 15 fest gegeneinander gespannt werden, um die Gelenkverbindung 14 zu arretieren.

Am Flansch 13 ist außerdem ein Anschlag 18 festgelegt, der mit einer Schraube 19 zusammenwirkt. Diese Schraube 19 ist verstellbar am Flansch 15 gehalten und bildet für den Anschlag 18 eine einstellbare Anlagefläche. Die Schraube 19 ist mit einer Kontermutter 20 verspannbar, um eine sichere Arretierung der Schraube 19 beim Betrieb des Fahrzeugs 2 zu gewährleisten.

Der Flansch 15 weist zwei Scharniere 21 auf, welche eine gelenkige Verbindung zu einem Anschlußflansch 22 herstellen. Dieser Anschlußflansch 22 ist über Langlöcher 23 und Schrauben 24 an der hinteren Säule 3 des Fahrzeugs 2 festgelegt. Über die Scharniere 21 kann die Tür 1 problemlos geöffnet und geschlossen werden.

Zwischen dem Anschlußflansch 22 und dem Türkörper 4 ist außerdem eine Gasfeder 25 vorgesehen, die in einer Mittelstellung der Tür 1 einen Totpunkt realisiert. Damit drückt die Gasfeder 25 die Tür 1 sowohl in der geschlossenen wie auch in der offenen Stellung jeweils gegen ihre Endlage.

Am linksseitigen Holm 10 ist ein Flansch 26 vorgesehen, der über Justierplatten 27 mit einem Schloß 28 verbunden ist. Die Justierplatten 27 weisen Langlöcher 29 auf, die eine Justierung des Schlosses 28 in zwei Achsen jeweils quer zur Längserstreckung der Führung 9 ermöglichen. Damit kann eine Anpassung der Tür 1 an unterschiedlichste Konfigurationen der Säulen 3 realisiert werden. An der Säule 3 ist eine Schloßfalle 30 vorgesehen, die mit dem Schloß 28 zusammenwirkt und die Tür 1 in dergeschlossenen Lage hält.

Sowohl an der Deckwand 5 wie auch an der Rückwand 6 können Warnsignale in Form von Lampen 31, Rückstrahlern 32 bzw. fluoreszierenden Aufdrucken 33 vorgesehen sein, damit die geöffnete Tür 1 von anderen Verkehrsteilnehmern besser gesehen wird. Dies ist insbesondere in jenen Fällen wichtig, in denen eine bereits vorhandene türlose Fahrzeugflotte mit den beschriebenen Türen nachgerüstet wird, da in diesem Fall nicht mit offenstehenden Türen gerechnet wird.

Figur 2 zeigt die Schloßfalle 30 bei geöffneter Tür in Draufsicht, die an der Säule 3 festgeklemmt ist. Die Schloßfalle 30 weist einen Zapfen 34 auf, der mit dem Schloß 28 zusammen wirkt. Außerdem ist an der Schloßfalle 30 ein Steg 35 gehalten, an dem ein federnder Anschlag 36 abgestützt ist. Dieser federnde Anschlag drückt das Schloß 28 in permanente Anlage an den Zapfen 34, um auf diese Weise ein Klappern des Schlosses 28 zu verhindern.

Der Steg 35 ist über lösbare Haltemittel 37 in Form von Schrauben an der Schloßfalle 30 gehalten, um den Anschlag 36 auch spiegelverkehrt montieren zu können. Damit kann die Tür 1 problemlos sowohl links- als auch rechtsseitig zum Fahrzeug 2 eingesetzt werden.

### Bezugszeichenliste

- 1: Tür
- 2: Fahrzeug
- 3: Säule
- 4: Türkörper
- 5: Deckwand
- 6: Rückwand
- 7: Steg
- 8: Rand
- 9: Führung
- 10: Holm
- 10a: Klemmschraube
- 11: Teleskop
- 12: Querholm
- 13: Flansch
- 14: Gelenkverbindung
- 15: Flansch
- 16: Durchbrechnung
- 17: Schraube
- 18: Anschlag
- 19: Schraube
- 20: Kontermutter
- 21: Scharnier
- 22: Anschlußflansch
- 23: Langloch
- 24: Schraube
- 25: Gasfeder
- 26: Flansch
- 27: Justierplatte
- 28: Schloß
- 29: Langloch
- 30: Schloßfalle
- 31: Lampe
- 32: Rückstrahler
- 33: Aufdruck
- 34: Zapfen
- 35: Steg
- 36: Anschlag
- 37: Haltemittel

## Patentansprüche

1. Tür für eine Kabine eines Fahrzeugs (2), insbesondere ein Flurförderfahrzeug, wobei die Tür (1) eine Deckwand (5), eine Rückwand (6) und diese verbindende Stege (7) aufweist, und die Tür (1) mindestens ein Scharnier (21) aufweist, dem mindestens ein Schloß (28) gegenüberliegt, **dadurch gekennzeichnet, daß** die Tür (1) zur Anpassung an unterschiedliche Kabinen in ihrer Erstreckung zwischen dem Schloß (28) und dem Scharnier (21) teleskopierbar ist.

2. Tür nach Anspruch 1, **dadurch gekennzeichnet, daß** die Tür (1) mindestens eine Führung (9) aufweist, in die mindestens ein Holm (10) eingreift, der das Scharnier (21) und/oder Schloß (28) trägt.

3. Tür nach Anspruch 2, **dadurch gekennzeichnet, daß** in mindestens einer der Führungen (9) beidseits Holme (10) eingreifen.

4. Tür nach mindestens einem der Ansprüche 1 bis 3, **dadurch gekennzeichnet, daß** das Teleskop (11) der Tür (1) arretierbar ist, wobei vorzugsweise mindestens eine Klemmschraube (10a) vorgesehen ist.

5. Tür nach mindestens einem der Ansprüche 1 bis 4, **dadurch gekennzeichnet, daß** die Tür (1) im Bereich des Scharniers (21) winkelverstellbar ist.

6. Tür nach Anspruch 5, **dadurch gekennzeichnet, daß** der Tür (1) ein verstellbarer Anschlag (18, 19) zugeordnet ist, der eine Verschwenkung der Tür (1) nach unten verhindert.

7. Tür nach mindestens einem der Ansprüche 1 bis 6, **dadurch gekennzeichnet, daß** an der Tür (1) mindestens eine Feder, vorzugsweise eine Gasfeder (25) angreift, so daß beim Öffnen und Schließen der Tür (1) ein Totpunkt überwunden werden muß.

8. Tür nach mindestens einem der Ansprüche 1 bis 7, **dadurch gekennzeichnet, daß** das Schloß (28) in mindestens zwei Achsen verstellbar ist.

9. Tür nah mindestens einem der Ansprüche 1 bis 8, **dadurch gekennzeichnet, daß** dem Schloß (28) ein federnder Anschlag (36) zugeordnet ist, der die Tür (1) gegen das Schloß (28) vorspannt.

10. Tür nach mindestens einem der Ansprüche 1 bis 9, **dadurch gekennzeichnet, daß** die Tür (1) an mindestens einer Seite wenigstens teilweise beleuchtet, reflektierend und/oder mit einer fluoreszierenden Farbe versehen ist.

## Claims

1. Door for a cab of a vehicle (2), in particular an industrial truck, wherein the door (1) has a top wall (5), a rear wall (6) and webs (7) connecting said top and rear walls, and the door (1) has at least one hinge (21) opposite which there is at least one lock (28), **characterized in that** the door (1) can be telescoped in its extent between the lock (28) and the hinge (21) for the purpose of adaptation to different cabs.

2. Door according to Claim 1, **characterized in that** the door (1) has at least one guide (9) in which at least one bar (10) bearing the hinge (21) and/or lock (28) engages.

3. Door according to Claim 2, **characterized in that** bars (10) engage on both sides in at least one of the guides (9).

4. Door according to at least one of Claims 1 to 3, **characterized in that** the telescope (11) of the door (1) is lockable, at least one clamping screw (10a) preferably being provided.

5. Door according to at least one of Claims 1 to 4, **characterized in that** the door (1) is adjustable in angle in the region of the hinge (21).

6. Door according to Claim 5, **characterized in that** the door (1) is assigned an adjustable stop (18, 19) which prevents the door (1) from pivoting downwards.

7. Door according to at least one of Claims 1 to 6, **characterized in that** at least one spring, preferably a gas-filled spring (25), acts on the door (1) such that a dead centre has to be overcome when opening and closing the door (1).

8. Door according to at least one of Claims 1 to 7, **characterized in that** the lock (28) is adjustable in at least two axes.

9. Door according to at least one of Claims 1 to 8, **characterized in that** the lock (28) is assigned a resilient stop (36) which pretensions the door (1) towards the lock (28).

10. Door according to at least one of Claims 1 to 9, **characterized in that** the door (1) is at least partially illuminated, reflective and/or provided with a fluorescent colour on at least one side.

## Revendications

1. Porte pour une cabine de véhicule (2), en particulier pour un chariot de manutention, la porte (1) présentant une paroi de recouvrement (5), une paroi arrière (6) et des entretoises (7) reliant celles-ci, et la porte (1) présentant au moins une charnière (21), en face de laquelle est disposée au moins une serrure (28), **caractérisée en ce que** la porte (1) peut être télescopée pour s'adapter à différentes cabines dans son étendue entre la serrure (28) et la charnière (21).

2. Porte selon la revendication 1, **caractérisée en ce que** la porte (1) présente au moins un guide (9), dans lequel s'engage au moins un longeron (10), qui porte la charnière (21) et/ou la serrure (28).

3. Porte selon la revendication 2, **caractérisée en ce que** des longerons (10) s'engagent des deux côtés dans au moins l'un des guides (9).

4. Porte selon au moins l'une quelconque des revendications 1 à 3, **caractérisée en ce que** le télescopage (11) de la porte (1) peut être bloqué, en prévoyant à cet effet de préférence au moins une vis de serrage (10a).

5. Porte selon au moins l'une quelconque des revendications 1 à 4, **caractérisée en ce que** la porte (1) peut être ajustée angulairement dans la région de la charnière (21).

6. Porte selon la revendication 5, **caractérisée en ce que** la porte (1) est associée à une butée réglable (18, 19), qui empêche un pivotement de la porte (1) vers le bas.

7. Porte selon au moins l'une quelconque des revendications 1 à 6, **caractérisée en ce qu'**au moins un ressort, de préférence un ressort pneumatique (25), vient en prise sur la porte (1), de sorte que lors de l'ouverture et de la fermeture de la porte (1), un point mort doive être surmonté.

8. Porte selon au moins l'une quelconque des revendications 1 à 7, **caractérisée en ce que** la serrure (28) peut être déplacée suivant au moins deux axes.

9. Porte selon au moins l'une quelconque des revendications 1 à 8, **caractérisée en ce que** l'on associe à la serrure (28) une butée à ressort (36), qui précontraint la porte (1) contre la serrure (28).

10. Porte selon au moins l'une quelconque des revendications 1 à 9, **caractérisée en ce que** la porte (1), sur au moins un côté, est au moins en partie éclairée, réfléchissante, et/ou pourvue d'une couleur fluorescente.
